# DEMANDE DE BREVET EUROPEEN

(11) **EP 4 620 796 A1**
(43) Date de publication de la demande: **24.09.2025**
(21) Numéro de dépôt: 25164312.8
(22) Date de dépôt: 18.03.2025
(51) Int. Cl.: B62K 21/24, B62K 13/08, B62K 7/04, B62K 19/18, B62K 13/04, B62K 15/00

(54) **SYSTÈME DE CONVERSION D'UN VÉHICULE LÉGER EN VÉHICULE LÉGER MODULAIRE ET RÉCIPROQUEMENT**

(30) Priorité: 19.03.2024 FR 2402736
(71) Demandeur: Gambade, 84140 Avignon (FR)
(72) Inventeur: GAMONET, Timothée, 84000 AVIGNON (FR)
(74) Mandataire: Brun, Philippe Alexandre Georges

(57) **Abrégé**

L'invention concerne un système de conversion d'un véhicule léger en un véhicule léger modulaire et réciproquement, ledit véhicule léger comprenant une structure arrière et un module avant raccordé à ladite structure arrière par l'intermédiaire d'un pivot de direction, sur lequel vient se fixer une potence (110) de guidon (100), ledit système de conversion étant caractérisé en ce que ledit pivot de direction se présente en deux parties, une première partie formant jonction femelle (1000) et une deuxième partie formant jonction mâle (2000), chacune desdites jonctions femelle (1000) et mâle (2000) étant solidaire de ladite structure arrière ou dudit module avant, ladite jonction mâle (2000) s'insérant dans ladite jonction femelle (1000) et en ce qu'un mécanisme de verrouillage(1300), intégré dans une desdites jonctions femelle (1000) ou mâle (2000), permet de maintenir ladite jonction mâle (2000) solidaire de ladite jonction femelle (1000).

## Description

La présente invention se rapporte à un système de conversion d'un véhicule léger en véhicule léger modulaire et réciproquement. Par véhicule léger, on entend essentiellement des véhicules de type bicyclettes ou tricycles par exemple. Par véhicule léger modulaire, on entend les véhicules capables d'accueillir un module avant. Ce module avant peut être par exemple une simple roue avec sa fourche de direction, auquel cas le véhicule est un véhicule de type bicyclette, ou bien un module de type cargo comprenant une structure permettant de rallonger le véhicule, apte à accueillir une plateforme ou une caisse pour permettre le transport de charges ou de personnes, et comprenant une ou plusieurs roues déportées, auquel cas le véhicule est de type vélo cargo.

Il existe sur le marché différentes solutions pour convertir des bicyclettes en vélos cargo. Ainsi, le système dénommé « quick Fix » commercialisé sous la marque commerciale « Add-Bike », consiste à raccorder un châssis monté sur deux roues latérales, à la fourche avant d'une bicyclette dont on a préalablement démonté la roue avant. Ce système nécessite l'utilisation d'outils pour démonter la roue avant puis fixer le châssis. La fixation requiert en outre un certain nombre d'étapes qui allongent la durée de conversion. Un tel système ne permettant pas de convertir le vélo rapidement, il n'est donc pas prévu pour une conversion quotidienne en fonction des besoins de son utilisateur. De plus, le poids maximum du chargement autorisé est de trente-cinq kilogrammes, alors que les vélos cargos classiques autorisent des chargements allant jusqu'à environ quatre-vingts kilogrammes, voir même jusqu'à trois cents kilogrammes pour certains. Le châssis n'est donc pas prévu pour supporter des charges lourdes et/ou encombrante.

Il existe également des vélos commercialisés sous la marque commerciale « Convercycle Bikes », pouvant être pliés en mode compact et dépliés en mode cargo. Pour cela, la roue arrière est mobile entre une position repliée dans la structure arrière du vélo et une position dépliée située derrière la structure arrière du vélo et laissant un espace libre dans la structure arrière du vélo pour y loger des charges à transporter. D'un poids supérieur à vingt kilogrammes, ce vélo reste cependant très lourd à manier, même en version compacte et n'est donc pas adapté à des trajets de plusieurs kilomètres, même lorsqu'il est pourvu d'une assistance électrique.

Les vélos commercialisés sous la marque commerciale « Hase Bikes » comprennent un cadre télescopique, situé sur l'avant du cadre, permettant de rallonger la longueur du cadre et déporter la roue avant vers l'avant du vélo, de manière à libérer de l'espace à l'avant du vélo pour pouvoir fixer une plateforme de transport au-dessus de la roue avant. Ce type de vélo avec cadre télescopique ne permet cependant pas de transporter n'importe quelle charge et notamment des enfants, du fait de la position de la plateforme au-dessus de la roue avant qui entraîne une instabilité de la charge.

Les vélos commercialisés par l'entreprise Américaine « Argo Bikes », quant à eux, permettent de modifier un vélo en un vélo cargo en raccordant la fourche avant du vélo à une plateforme connectée à une bielle de direction de la roue déportée du module cargo. Le cadre du module cargo est en outre fixé au cadre du vélo au niveau du boîtier de pédalier et en connectant les freins du module cargo au guidon du vélo. Cette modification nécessite cependant l'utilisation d'outils et est assez longue à effectuer puisqu'elle nécessite entre cinq et dix minutes, ce qui est rebutant pour un usage quotidien. De plus, le point d'accroche du module cargo au niveau du boîtier de pédalier du vélo nécessite une transformation importante dudit boîtier, si bien que le système de conversion ne peut pas s'adapter facilement sur des vélos électriques existants.

Les demandes de brevet WO2018035512 et WO2019014506 décrivent des systèmes de conversion de vélo en vélo cargo similaires à ceux qui viennent d'être décrits et commercialisés par l'entreprise Argo Bikes. Leur principal inconvénient réside dans le fait que la conversion reste trop longue à réaliser si bien qu'ils ne sont pas adaptés pour un usage quotidien.

La demande de brevet WO2023186599 décrit un véhicule léger démontable en deux parties comprenant une structure avant, comprenant une roue avant, une fourche avant et une potence de guidon, et une structure arrière supportant la roue arrière et le pédalier. Le guidon de ce véhicule léger est également démontable en deux parties, une partie étant solidaire de la structure arrière et comprenant une commande d'un sélecteur de vitesse et une commande d'un système de freinage arrière et la deuxième partie étant solidaire de la structure avant du véhicule et comprenant une commande d'un système de freinage avant. La solution décrite dans cette demande de brevet implique une transformation du cadre du vélo, si bien qu'elle ne peut pas s'adapter sur un cadre de vélo classique. De plus, outre le cadre de vélo, cette solution nécessite de modifier d'autres pièces telles que le levier de frein, les jeux de direction, ou encore le guidon, ce qui implique un coût très important de fabrication.

Le brevet US10,450,029 B2 décrit un mécanisme d'accroche permettant de changer très rapidement de fourche avant sur une bicyclette, sans utilisation d'outil. Ce mécanisme est rajouté sur le cadre de la bicyclette et est raccordé à la potence d'un guidon. Il permet d'assurer le raccordement d'un pivot d'une fourche avant à la potence du guidon. Pour cela, une gorge annulaire est ménagée à l'extrémité du pivot de fourche et lorsque le pivot de fourche est inséré à travers la douille de direction, l'utilisateur actionne un loquet du mécanisme d'accroche qui s'engage dans la gorge annulaire du pivot de fourche pour fixer ledit pivot de fourche. Le mécanisme d'accroche décrit dans ce brevet est rajouté sur le cadre du vélo, au-dessus de la douille de direction. Outre le fait que ce rajout sur le cadre n'est pas très esthétique, son épaisseur entraîne une surélévation du guidon qui peut être gênante pour un utilisateur et diminuer le confort de conduite. De plus, l'insertion, ou le retrait, de l'empreinte mâle du pivot de fourche dans l'empreinte femelle du mécanisme d'accroche est très difficile sans prévoir un jeu entre les deux empreintes. Par conséquent, sans jeu entre les deux empreintes, le montage ou le démontage du pivot de fourche nécessite l'utilisation d'un maillet et ne facilite pas des conversions répétées quotidiennes. Pour faciliter l'insertion de l'empreinte mâle du pivot de fourche dans une empreinte femelle du mécanisme d'accroche, il apparait nécessaire de prévoir un jeu entre les deux empreintes. Or l'existence d'un tel jeu peut engendrer l'apparition d'un jeu entre le pivot de fourche et la potence du guidon. Un tel jeu se répercute sur l'entraînement de la roue avant par le guidon et sur la précision de pilotage, ce qui est préjudiciable et diminue grandement le confort de conduite.

Le document EP 4 335 737 décrit un dispositif de connexion permettant de fixer différents modules de manière interchangeable, en tant que parties avant de vélo, sur le cadre d'un vélo. Un pivot de direction est relié à une douille de direction par une liaison pivot assurée par un roulement de jeu de direction haut et un roulement de jeu de direction bas. Le pivot de direction se présente en deux parties, une partie comprenant un tube creux, formé par un tube de direction du véhicule et solidaire de la potence du guidon, et une partie comprenant un axe de serrage rapide solidaire de la partie avant et s'insérant dans le tube creux. Le dispositif de connexion est intégré au tube de direction du cadre de vélo. Un mécanisme de verrouillage comprenant un logement interne, un coulisseau, un couvercle, un ressort des billes et une poignée est intégré dans le tube creux et permet de maintenir l'axe de serrage rapide solidaire du tube creux.

Le document DE 10 2007 057326 décrit un mécanisme de fixation rapide permettant de remplacer de manière simple et rapide la fourche d'une roue avant de bicyclette. Ce mécanisme permet de raccorder la fourche d'une roue avant à la structure arrière du véhicule par l'intermédiaire d'un pivot de direction qui est relié à une douille de direction par une liaison pivot assurée par un roulement de jeu de direction haut et un roulement de jeu de direction bas. Le pivot de direction se présente en deux parties, une partie comprenant le tube de direction solidaire de la potence et une partie comprenant un axe de fourche conique solidaire de la partie avant et s'insérant dans le tube de direction. Un mécanisme de verrouillage comprenant une tige de traction, dont l'extrémité est filetée, et prévue pour être vissée dans un trou fileté de l'axe de fourche conique et un levier permettant de tirer la tige de traction est intégré dans le tube de direction et permet de maintenir l'axe de fourche conique solidaire du tube de direction. Pour permettre d'accueillir l'axe de fourche conique, le tube de direction comprend une partie supérieure tubulaire et une section inférieure comprenant un espace de réception conique. Cet espace de réception conique fait partie intégrante du tube de direction qui est usiné pour intégrer cet espace. L'inconvénient de cette solution réside dans le fait que si la pente de l'espace conique de réception est trop longue, le montage et le démontage de la fourche dans l'espace de réception nécessite de forcer et si la pente est trop courte, elle entraine l'apparition d'un jeu entre l'axe de fourche et la potence du guidon, dans le temps.

Les solutions existantes sur le marché pour convertir un véhicule léger, de type bicyclette, en véhicule léger modulaire, de type vélo cargo et réciproquement, ne donnent pas entière satisfaction car elles nécessitent généralement trop d'étapes et sont donc trop longues à mettre en œuvre pour une utilisation pluriquotidienne. De plus, la plupart d'entre-elles nécessitent l'utilisation d'outils, ce qui n'est pas acceptable lorsque l'on souhaite interchanger très rapidement les modules avant du véhicule léger en fonction de l'usage que l'on souhaite en faire au moment où on veut l'utiliser. Enfin, certaines solutions peuvent soit impliquer une insertion ou un retrait très difficile du pivot de fourche, soit nécessiter l'apparition d'un jeu dans la direction entre le guidon et la roue avant, qui affecte la précision de pilotage et nuit au confort de conduite.

L'invention a donc pour but de remédier à au moins un des inconvénients de l'art antérieur. L'invention vise notamment à concevoir un système de conversion d'un véhicule léger en un véhicule léger modulaire et réciproquement, ledit véhicule léger comprenant une structure arrière et un module avant apte à se raccorder à ladite structure arrière, ledit système de conversion ne nécessitant l'utilisation d'aucun outil et permettant un accrochage rapide, de préférence inférieur à une minute, du module avant à la structure arrière, de sorte qu'il est possible de convertir le véhicule léger aussi souvent que nécessaire, selon les usages pluriquotidiens que l'utilisateur souhaite en faire pour adapter la capacité de chargement et l'encombrement du véhicule à ses besoins quotidiens. Le système de conversion doit être le plus simple possible pour pouvoir s'adapter sur des structures existantes et nécessiter un minimum de modification de pièces. Le système de conversion doit en outre permettre un bon maintien du module avant et éviter l'apparition d'un jeu dans la direction entre le guidon et la roue avant, pour permettre une conduite fluide et confortable. Enfin, le véhicule modulaire doit rester léger pour être facilement maniable et pour pouvoir être utilisé sur plusieurs kilomètres sans fatigue.

A cet effet, l'invention a pour objet un système de conversion d'un véhicule léger en un véhicule léger modulaire et réciproquement, ledit véhicule léger comprenant une structure arrière et un module avant se présentant sous la forme d'une roue avant de bicyclette équipée d'une fourche raccordée à ladite structure arrière par l'intermédiaire d'un pivot de direction, ledit véhicule léger modulaire comprenant une structure arrière et un module avant se présentant sous la forme d'un module cargo comprenant au moins une roue déportée et un système de transmission de rotation raccordé à ladite structure arrière par l'intermédiaire d'un pivot de direction, ladite structure arrière comprenant un cadre supportant au moins une roue arrière, un guidon et une douille de direction, solidaire dudit cadre et traversée par ledit pivot de direction sur lequel vient se fixer une potence dudit guidon, ledit pivot de direction étant relié à ladite douille de direction par une liaison pivot assurée par un roulement de jeu de direction haut et un roulement de jeu de direction bas, et se présentant en deux parties, une première partie formant jonction femelle et une deuxième partie formant jonction mâle, chacune desdites jonctions femelle et mâle étant solidaire de ladite potence de guidon de ladite structure arrière ou dudit module avant, ladite jonction mâle s'insérant dans ladite jonction femelle, ledit système de conversion étant caractérisé en ce que ladite première partie formant jonction femelle comprend un tube et, fixé à l'intérieur dudit tube, un fourreau dont une extrémité ouverte forme un orifice de ladite jonction femelle par lequel s'insère ladite jonction mâle, ledit fourreau présentant, sur le pourtour dudit orifice, une portée conique et, opposée à ladite portée conique, une extrémité présentant un alésage, en ce que ladite deuxième partie formant jonction mâle comprend une extrémité mâle orientée en regard de ladite extrémité dudit fourreau et présentant une portée cylindrique et, opposée à ladite extrémité mâle, une surface conique, et en ce qu'un mécanisme de verrouillage est disposé à ladite extrémité dudit fourreau de manière à coopérer avec ladite extrémité mâle de ladite jonction mâle, de sorte que ladite portée cylindrique et ladite surface conique de ladite jonction mâle sont plaquées respectivement contre ledit alésage et contre ladite portée conique dudit fourreau par actionnement dudit mécanisme de verrouillage permettant de maintenir ladite jonction mâle solidaire de ladite jonction femelle.

Ainsi, le pivot de direction, traditionnellement fixé à la fourche d'une roue avant de bicyclette et à la potence du guidon, est remplacé par un pivot de direction séparable en deux parties, comprenant une jonction femelle et une jonction mâle destinées à coopérer l'une avec l'autre et à être maintenues fixement l'une à l'autre grâce à un mécanisme de verrouillage intégré. Le système de conversion permet donc une conversion simple du véhicule par une simple insertion de la jonction mâle dans la jonction femelle, chacune desdites jonctions étant solidaire de la potence de guidon de la structure arrière ou du module avant. La conversion est réalisée sans outil et dans un temps très rapide, généralement inférieur à une minute et de préférence entre trente secondes et une minute. Un tel système permet donc de convertir le véhicule léger, de type vélo par exemple, en véhicule modulaire, de type vélo cargo par exemple, et réciproquement, sans contrainte et plusieurs fois par jour au gré des besoins de chargement et d'encombrement. Le cadre de la structure arrière du vélo n'a pas besoin d'être modifié, si bien que le système de conversion peut s'adapter sur des cadres de vélo existants. Pour cela, il suffit de remplacer le pivot de fourche d'un vélo classique par le pivot de direction du système de conversion dont une partie est solidaire de la potence du guidon de la structure arrière et dont l'autre partie est solidaire du module avant.

Selon d'autre caractéristiques optionnelles du système de conversion :
ladite première partie formant jonction femelle est solidaire de ladite potence de guidon de ladite structure arrière dudit véhicule, ledit tube de ladite jonction femelle formant un tube de direction, traversant ladite douille de direction, sur lequel se fixe ladite potence dudit guidon, en ce que ladite extrémité dudit fourreau, opposée à ladite portée conique, comprend un orifice débouchant dans lequel est fixé ledit mécanisme de verrouillage et en ce que ladite deuxième partie formant jonction mâle est solidaire dudit module avant et comprend dans une surface de ladite extrémité mâle, un orifice débouchant apte à accueillir ledit mécanisme de verrouillage ;
ladite première partie formant jonction femelle est solidaire de ladite potence de guidon de ladite structure arrière dudit véhicule, ledit tube de ladite jonction femelle formant un tube de direction, traversant ladite douille de direction et sur lequel se fixe ladite potence dudit guidon, en ce que ladite extrémité dudit fourreau, opposée à ladite portée conique, comprend un orifice débouchant au-dessus duquel est disposé ledit mécanisme de verrouillage et en ce que ladite deuxième partie formant jonction mâle est solidaire dudit module avant, ladite extrémité mâle de ladite jonction mâle étant apte à passer à travers ledit orifice débouchant dudit fourreau et à s'insérer dans ledit mécanisme de verrouillage ;
le mécanisme de verrouillage est choisi parmi une broche à billes ou une goupille d'arrêt ou un levier de blocage ou un raccord à billes et comprend un mécanisme d'actionnement accessible par le haut du tube de direction ;
le mécanisme de verrouillage est une broche à billes, dont les billes de blocage, en position de verrouillage, appuient contre une face interne d'extrémité de ladite jonction mâle, de sorte qu'elles maintiennent ladite surface conique de ladite jonction mâle contre ladite portée conique de ladite jonction femelle ;
un jeu négatif, compris entre zéro millimètre et une valeur égale au rayon des billes de blocage de la broche à billes, est prévu entre l'orifice de sortie des billes de blocage de la broche à billes et ladite face interne d'extrémité de ladite jonction mâle ;
le mécanisme de verrouillage est une broche à billes et des trous débouchants sont ménagés dans la paroi annulaire de ladite jonction mâle, en regard des orifices de sorties des billes de blocage de ladite broche à billes, pour accueillir lesdites billes de blocage en position de verrouillage, de sorte qu'elles bloquent la rotation des deux jonctions mâle et femelle l'une par rapport à l'autre et maintiennent ladite surface conique de ladite jonction mâle en appui contre ladite portée conique de ladite jonction femelle ;
lesdits trous débouchants sont sensiblement désaxés vers le bas par rapport aux orifices de sortie desdites billes de blocage de ladite broche à billes, d'une valeur comprise entre zéro millimètre et une valeur égale au rayon desdites billes de blocage ;
le mécanisme de verrouillage est un raccord à billes disposé au-dessus de l'orifice débouchant pratiqué à l'extrémité du fourreau et en position de verrouillage, les billes dudit raccord à billes se positionnent dans des trous borgnes ménagés dans la paroi annulaire externe de ladite extrémité mâle de ladite jonction mâle ;
le module avant est une roue avant de bicyclette, dont la fourche est solidaire de ladite jonction mâle, ou un module cargo comprenant au moins une roue déportée et dont un système de transmission de rotation est solidaire de ladite jonction mâle ;
lorsque le module avant est un module cargo et que le cadre de ladite structure arrière comprend un pédalier, ledit système de conversion comprend en outre un système de fixation d'un cadre du module cargo sur le cadre de ladite structure arrière du véhicule léger modulaire, ledit système de fixation raccordant un premier point dudit cadre de ladite structure arrière, se situant entre le pédalier et la douille de direction, à un deuxième point dudit cadre du module cargo se situant en regard dudit premier point.

D'autres particularités et avantages de l'invention apparaitront à la lecture de la description faite à titre d'exemple illustratif et non limitatif, en référence aux Figures annexées qui représentent :
- la figure 1 représente une vue en coupe d'un système de conversion selon l'invention, en position verrouillée ;
- la figure 2 représente une autre vue en coupe du système de conversion de la figure 1, tourné à 90° selon l'axe de rotation A-A par rapport à la figure 1 et en position verrouillée ;
- la figure 3 représente une vue en coupe d'un détail de mécanisme de verrouillage fonctionnant selon un mode particulier de réalisation ;
- la figure 4 représente un schéma d'une structure arrière d'un véhicule léger raccordée à un module avant se présentant sous la forme d'un module cargo ;
- la figure 5 représente une vue en coupe d'un système de fixation du cadre d'un module cargo avant sur le cadre de la structure arrière d'un véhicule léger.

On entend par « structure arrière » d'un véhicule léger, une structure comprenant un cadre supportant au moins une roue et un guidon, le guidon étant formé d'une potence et d'un cintre. Le cadre peut également supporter un pédalier. Cette structure arrière peut également être équipée d'une assistance électrique.

On entend par « module avant » d'un véhicule léger, une structure comprenant au moins une roue avant et destinée à se raccorder à la structure arrière d'un véhicule léger. Ce peut être une simple roue avec sa fourche de direction, auquel cas le véhicule léger est un véhicule de type bicyclette, ou bien un module de type cargo comprenant un cadre allongé apte à recevoir une plateforme ou une caisse pour permettre le transport de charges ou de personnes et comprenant une ou plusieurs roues déportées. Plus généralement, ce peut être tout autre type de module raccordable sur la structure arrière d'un véhicule léger.

On entend par « douille de direction » un tube, solidaire du cadre de la structure arrière du véhicule, à travers lequel vient s'insérer un pivot de direction destiné à relier le guidon du véhicule à la direction du module avant pour que la rotation du guidon entraîne la rotation de la (des) roue(s) du module avant. Le guidon comprend une potence qui vient se fixer, par le dessus, sur le pivot de direction.

On entend par « haut » ou « dessus » d'une pièce d'un véhicule léger, la partie supérieure d'une pièce, lorsqu'elle est montée sur ledit véhicule léger, la partie haute étant orientée vers le guidon et la partie basse étant orientée vers le sol.

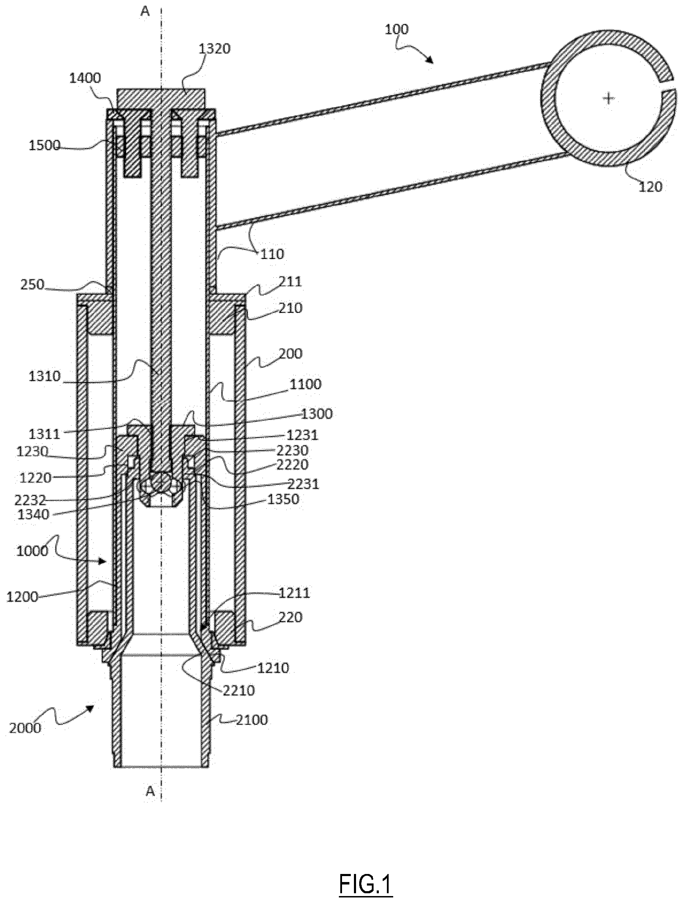

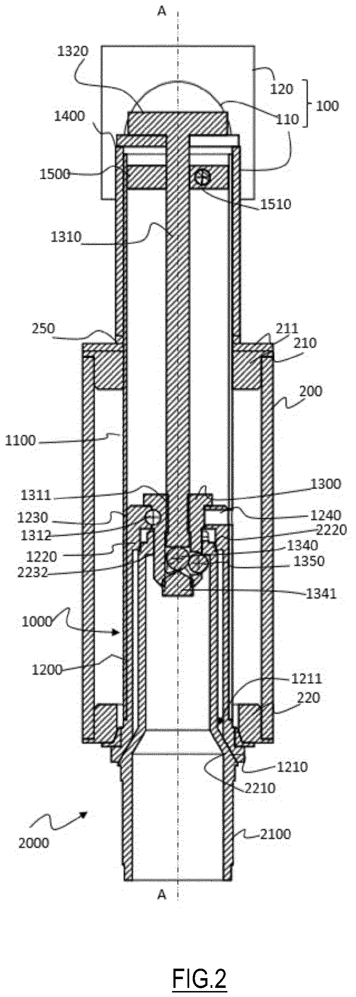

La figure 1 représente une vue en coupe d'un système de conversion selon l'invention. Ce système de conversion comprend un pivot de direction séparable en deux parties, comprenant une jonction femelle 1000 et une jonction mâle 2000 destinées à coopérer l'une avec l'autre et à être maintenues fixement l'une à l'autre grâce à un mécanisme de verrouillage 1300 intégré. La figure 1 représente ce pivot de direction en position verrouillée. La figure 2 représente une autre vue en coupe, tournée à 90°selon l'axe de rotation A-A par rapport à la vue en coupe de la figure 1, de ce pivot de direction en position verrouillée. On entend par « axe de rotation A-A », l'axe de révolution du pivot de direction, autour duquel ledit pivot de direction est entraîné en rotation par la potence 110 du guidon 100. Les mêmes références sont utilisées sur les figures 1 et 2 pour désigner les mêmes éléments et les deux figures sont décrites simultanément pour des raisons de simplification des explications.

De manière avantageuse, la jonction femelle 1000 est solidaire de la potence 110 de guidon 100 de la structure arrière du véhicule tandis que la jonction mâle 2000 est solidaire du module avant.

La jonction femelle 1000 du pivot de direction comprend un tube de direction 1100 traversant la douille de direction 200, laquelle est solidaire du cadre de la structure arrière du véhicule léger.

Le tube de direction 1100 et la douille de direction 200 sont reliés par une liaison pivot assurée par un roulement de jeu de direction haut 210 et un roulement de jeu de direction bas 220, disposés respectivement à l'extrémité haute et à l'extrémité basse de la douille de direction 200. Classiquement, un jeu de direction comprend un roulement à billes enserré entre une cuvette, un joint d'étanchéité et une bague conique. Les cuvettes ne sont cependant pas nécessaires lorsque le jeu de direction est intégré à la douille de direction 200 comme représenté sur les figures 1 et 2. Les roulements des jeux de direction haut 210 et bas 220 permettent donc d'effectuer la jonction entre la douille de direction 200, solidaire du cadre de la structure arrière du véhicule, et le pivot de direction. Ils assurent également la rotation de ce pivot de direction afin de permettre à l'utilisateur de diriger le véhicule en tournant le guidon. Un cache 211 est prévu sur le dessus du roulement de jeu de direction haut 210 afin d'éviter toute rentrée d'eau ou de poussière.

Le guidon 100 du véhicule comprend d'une part un cintre 120, destiné à être pris en main et sur lequel sont prévues notamment des manettes de commande de systèmes de freinage et éventuellement de changement de vitesse et d'autre part, une potence 110 destinée à se fixer sur ledit tube de direction 1100, de sorte qu'elle enserre ledit tube de direction 1100 et repose au-dessus du cache 211 du roulement de jeu de direction haut 210.

Une entretoise 250 peut être placée entre le cache 211 du roulement du jeu de direction haut 210 et le bas de la potence 110 du guidon. Une telle entretoise 250 permet de régler la hauteur de la potence 110 et donc du guidon 100. Généralement, un jeu d'entretoises dont la hauteur varie entre un millimètre et trente millimètres par exemple, est livré en magasin. C'est ensuite au moment du montage final du véhicule, par les employés du magasin, que le choix de la hauteur de l'entretoise est classiquement réalisé.

A l'intérieur du tube de direction 1100 est fixé un fourreau 1200 dont une extrémité ouverte forme l'orifice 1211 de ladite jonction femelle 1000 par lequel s'insère ladite jonction mâle 2000. Le fourreau 1200 présente, sur le pourtour dudit orifice 1211, une portée conique 1210. Un mécanisme de verrouillage 1300 est en outre fixé dans un orifice débouchant 1231 ménagé dans une extrémité 1230 du fourreau 1200, opposée à ladite portée conique 1210. Ce mécanisme de verrouillage 1300 peut être fixé par soudure, par vissage ou au moyen d'une goupille 1312 ou par tout autre moyen connu. Ce mécanisme de verrouillage 1300 est actionné grâce à un mécanisme d'actionnement 1320 accessible par le haut dudit tube de direction 1100.

La surface annulaire interne de l'extrémité 1230 du fourreau 1200, opposée à l'orifice 1211 de ladite jonction femelle 1000, présente en outre un alésage 1220, contre lequel une portée cylindrique 2220 de ladite jonction mâle 2000, une fois insérée et verrouillée, vient se plaquer. Un centrage court entre la jonction mâle 2000 et le fourreau 1200, à l'extrémité de ladite jonction mâle 2000, permet ainsi d'obtenir ce contact cylindre / cylindre entre l'alésage 1220 du fourreau 1200 et la portée cylindrique 2220 de ladite jonction mâle, de manière à guider la jonction mâle 2000 dans le fourreau 1200 et à bloquer la rotation de la jonction mâle 2000 selon un axe perpendiculaire à l'axe de rotation A-A.

Le fourreau 1200 est fixé au tube de direction 1100 par tout moyen connu, tel que par exemple le collage, le soudage, le vissage, ou encore le rivetage. Il peut ainsi être fixé par soudure par exemple, contre l'extrémité basse du tube direction 1100 qui se positionne en butée au-dessus de la portée conique 1210. De manière préférée, il est fixé au tube de direction 1100 de manière qu'il puisse être démonté pour permettre des travaux de maintenance. Dans ce cas, il peut être fixé au moyen d'au moins une vis par exemple, vissée à travers la paroi du tube de direction 1100 et dans un trou borgne 1240 ménagé dans l'épaisseur de l'extrémité 1230 du fourreau 1200, opposée à l'orifice 1211 de ladite jonction femelle 1000. De préférence, il est fixé au moyen de trois vis disposées à égale distance les unes des autres sur le pourtour du tube de direction 1100.

Le système de conversion selon l'invention comprend en outre une jonction mâle 2000, solidaire du module avant du véhicule, destinée à s'insérer dans l'orifice 1211 de la jonction femelle 1000 et à se positionner contre l'alésage 1220 du fourreau 1200. Cette jonction mâle se présente sous forme d'un tube creux et comprend une surface d'extrémité 2230. Un orifice débouchant 2231 est ménagé dans cette surface d'extrémité 2230 pour accueillir le mécanisme de verrouillage 1300. La portée cylindrique 2220 située à l'extrémité cylindrique de la jonction mâle est destinée à venir se plaquer contre l'alésage 1220 du fourreau 1200 lorsque les deux jonctions mâle et femelle sont verrouillées l'une à l'autre. La jonction mâle 2000 présente en outre, à son extrémité opposée, une surface conique 2210 destinée à être plaquée contre la portée conique 1210 dudit orifice 1211 de ladite jonction femelle 1000 par actionnement dudit mécanisme de verrouillage 1300. Cette jonction mâle 2000 se prolonge, sous la surface conique 2210 par un tube 2100 dont les parois externes sont fixées solidairement au module avant, c'est-à-dire à la fourche dans le cas où le module avant est une fourche fixée à une roue avant, ou au tube de direction déportée, lui-même solidaire d'un système de transmission de rotation, dans le cas d'un module cargo. La fixation de cette jonction mâle au module avant est de préférence réalisée par soudure.

Le mécanisme de verrouillage 1300 permet de plaquer la jonction mâle contre la jonction femelle et de serrer verticalement les deux pièces suffisamment pour les maintenir solidement l'une à l'autre et éviter qu'elles ne tournent ou ne translatent l'une par rapport à l'autre. Ainsi, le mécanisme de verrouillage permet de plaquer la surface conique 2210 de la jonction mâle 2000 contre la portée conique 1210 du fourreau 1200 de la jonction femelle 1000 et de plaquer la portée cylindrique 2220 de la jonction mâle 2000, opposé à la surface conique 2210, contre l'alésage 1220 du fourreau 1200. Le plaquage de la jonction mâle 2000 contre l'alésage 1220 situé en haut du fourreau 1200 et contre la portée conique 1210 située sur le pourtour de l'orifice 1211 de la jonction femelle1000, permet d'éviter l'apparition d'un jeu entre les jonctions mâle et femelle et de les rendre totalement solidaires l'une de l'autre.

Le mécanisme de verrouillage 1300 peut se présenter sous différentes formes. Il peut se présenter sous la forme d'une goupille d'arrêt, non représentée sur les figures. Dans ce cas, la goupille comprend un tube dans lequel une tige est mobile en translation entre une position verrouillée et une position déverrouillée par actionnement d'un bouton poussoir. Des billes de blocage sont positionnées à l'extrémité du tube, opposée au bouton poussoir. La tige comprend une gorge annulaire qui forme, avec le tube qui l'enveloppe, un logement dans lequel les billes de blocage viennent se loger en position déverrouillée. Une pression sur le bouton poussoir agit sur un ressort qui pousse la tige dans le tube de sorte que la gorge annulaire se positionne en regard des billes de blocage et qu'un logement se crée, dans lequel les billes de blocage viennent se loger. Les billes sont alors en position déverrouillée. En relâchant le bouton poussoir, le ressort revient vers sa position de repos et tire sur la tige, de sorte que le diamètre de la tige pousse les billes de blocage vers l'extérieur du tube, dans une position de verrouillage. Le bouton poussoir d'actionnement de la goupille d'arrêt est dans ce cas disposé en haut du tube de direction 1100, de préférence sur le dessus dudit tube de direction 1100.

Le mécanisme de verrouillage peut également se présenter sous la forme d'un levier de blocage. Dans ce cas, le mécanisme comprend une tige à l'extrémité de laquelle un levier est apte à pivoter d'une position coaxiale à la tige en position déverrouillée à une position à 90° par rapport à la tige en position verrouillée, ledit levier étant actionné grâce à un bouton poussoir ou une manette disposée sur le dessus du tube de direction 1100.

De préférence, et tel que représenté sur les figures 1 et 2, le mécanisme de verrouillage 1300 se présente sous la forme d'une broche à billes actionnable grâce à une molette 1320 accessible par le haut du tube de direction 1100. Une telle broche à billes comprend au moins deux billes, de préférence trois, dénommées billes de blocage 1350 disposées dans un logement du mécanisme de verrouillage lorsque le mécanisme est en position déverrouillée et aptes à s'étendre hors de leur logement vers l'extérieur du mécanisme, en position verrouillée. Un bouchon 1341 permet de démonter les billes, lors d'opérations d'entretien du mécanisme par exemple. Les billes de blocage 1350 s'étendent hors de leur logement sous l'action d'une poussée qui peut être exercée par une tige ou, de préférence, une bille de poussée 1340. Le mécanisme de verrouillage comprend un trou taraudé 1311 dans lequel s'insère une tige 1310 dont l'extrémité opposée comprend une molette 1320 accessible par le haut du tube de direction 1100. De préférence, la molette 1320 d'actionnement du mécanisme est disposée sur le dessus du tube de direction 1100. Lorsque l'utilisateur tourne la molette 1320, par exemple dans le sens horaire, il visse la tige 1310 dans le trou taraudé 1311 et pousse alors l'extrémité de la tige, ou la bille de poussée 1340, entraînant alors les billes de blocage 1350 vers l'extérieur de leur logement. A l'inverse, lorsque l'utilisateur tourne la molette dans le sens contraire, anti-horaire dans l'exemple, il dévisse la tige 1310 dans le trou taraudé 1311, permettant à l'extrémité de la tige ou à la bille de poussée 1340 de remonter dans son logement et aux billes de blocage 1350 de revenir dans leur logement.

Le mécanisme de verrouillage 1300 sous forme de broche à billes, et comprenant une bille de poussée 1340, est préféré car il permet un mouvement fluide de l'entrée et de la sortie des billes de blocage 1350 et donc un verrouillage souple.

Ce mécanisme permet de verrouiller solidement les jonctions mâle 2000 et femelle 1000 du pivot de direction, de sorte que les jonctions sont solidaires l'une de l'autre et ne bougent pas l'une par rapport à l'autre.

Selon un premier mode de réalisation et tel qu'illustré sur les figures 1 et 2, en position de verrouillage, les billes de blocage 1350 appuient contre une face interne d'extrémité 2232 de ladite jonction mâle 2000 située de part et d'autre dudit orifice d'accueil 2231 dudit mécanisme de verrouillage 1300. En position de verrouillage, les billes de blocage 1350 appuyant contre ladite face interne d'extrémité 2232 de la jonction mâle 2000, elles maintiennent la jonction mâle 2000 plaquée contre le fourreau 1200. Ainsi, la surface conique 2210 de la jonction mâle 2000 est plaquée contre la portée conique 1210 du fourreau 1200, de manière à bloquer toute translation et toute rotation selon l'axe A-A, par friction, de la jonction mâle 2000 par rapport à la jonction femelle 1000. De plus, la portée cylindrique 2220 de la jonction mâle 2000 est plaquée contre l'alésage 1220 du fourreau 1200, de manière guider la jonction mâle dans son logement et à bloquer toute rotation de la jonction mâle 2000 selon un axe perpendiculaire à l'axe A-A de révolution du pivot de direction, par rapport à la jonction femelle 1000.

Selon une variante de réalisation, le blocage en rotation de la jonction mâle 2000 par rapport à la jonction femelle 1000 peut être réalisé autrement que par friction. En effet, il peut être réalisé au moyen de tétons solidaires de la jonction mâle 2000 par exemple, disposés sur un épaulement pratiqué sur le pourtour inférieur de la surface conique 2210 de ladite jonction mâle 2000, et qui s'insèrent dans des orifices ménagés dans un épaulement pratiqué sur le pourtour inférieur de la portée conique 1210 de la jonction femelle 1000.

Dans un exemple illustratif, mais aucunement limitatif, les billes de blocage 1350 présentent un diamètre de cinq millimètres. Bien sûr, d'autres billes présentant des diamètres différents peuvent être utilisées sans sortir du cadre de l'invention. De manière avantageuse, un jeu négatif est prévu entre l'orifice de sortie des billes de blocage 1350 et la face interne d'extrémité 2232 de la jonction mâle 2000. Un tel jeu négatif permet aux billes de blocage 1350, en position de verrouillage, de maintenir la jonction mâle 2000 en tension, en la remontant vers le haut dudit fourreau 1200, et de maintenir en pression la surface conique 2210 de ladite jonction mâle 2000 contre la portée conique 1210 de ladite jonction femelle, de manière à bloquer la rotation de la jonction mâle selon l'axe A-A par friction au niveau de la portée conique.

Ce serrage permet d'une part, de s'assurer que la surface conique 2210 est correctement positionnée et d'autre part, de transmettre le couple, par adhérence, de sorte que lorsqu'un utilisateur tourne le guidon 100, la rotation de la potence 110 entraîne la rotation de l'ensemble du pivot de direction formé par la jonction mâle 2000 et la jonction femelle 1000. Cette rotation du pivot de direction est ensuite transmise soit à une fourche lorsque le module avant est une fourche fixée sur une roue avant, soit à un tube de direction déportée d'un module cargo.

De manière avantageuse, le jeu négatif est compris entre zéro millimètre et une valeur égale au rayon des billes de blocage 1350 de la broche à billes. Ainsi, pour des billes de cinq millimètres de diamètre par exemple, le jeu négatif est compris entre zéro et deux millimètres et demi.

Ce mode de réalisation, permettant un blocage de la rotation selon l'axe A-A par friction au niveau de la portée conique, nécessite cependant un usinage de la surface de la portée conique 1210 du fourreau 1200 d'une part et de la surface conique 2210 de la jonction mâle 2000 d'autre part, de manière à les rendre très adhérentes. Or, ce procédé d'usinage est assez coûteux à réaliser.

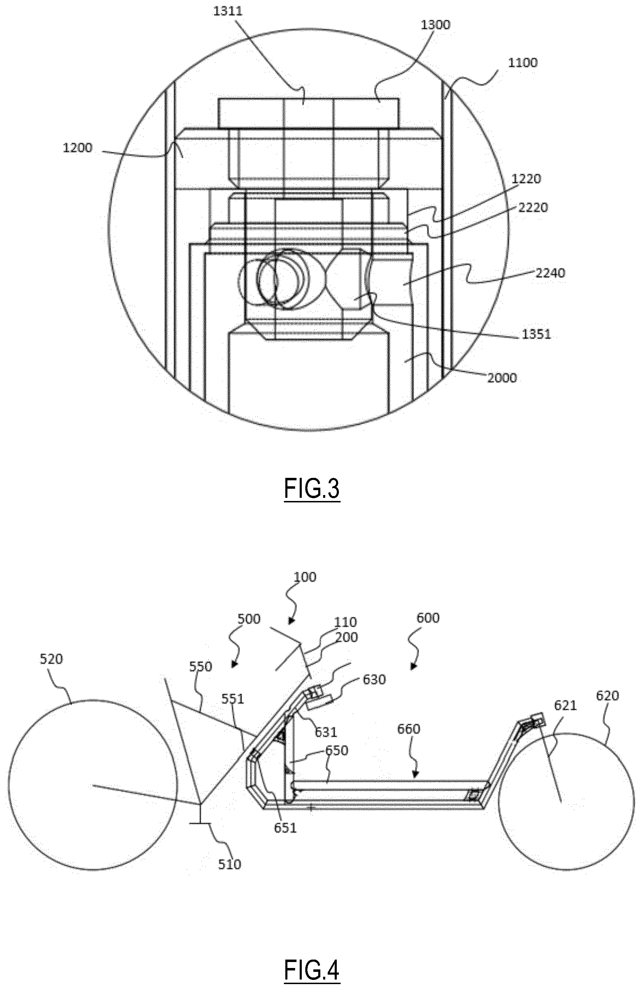

Par conséquent, pour réduire les coûts de production, un deuxième mode de réalisation, tel que représenté sur la figure 3, consiste à bloquer la rotation des jonctions mâle et femelle l'une par rapport à l'autre par blocage et non plus par adhérence. Un tel mode de réalisation permet de conserver lisses la surface de la portée conique 1210 de la jonction femelle 1000 ainsi que la surface conique 2210 de la jonction mâle 2000. Ce mode de réalisation consiste à prévoir autant de trous débouchants dans la paroi annulaire de la jonction mâle 2000 qu'il y a de billes de blocage 1350 dans la broche à billes. Ces trous débouchants, référencés 2240 sur la figure 3, sont pratiqués à des emplacements situés en regard des orifices de sortie 1351 desdites billes de blocage 1350. Ainsi, lorsque le mécanisme de verrouillage 1300 est actionné, les billes de blocage 1350 sortent de leur logement et viennent se positionner dans les trous débouchants 2240, de sorte qu'elles bloquent la rotation des deux jonctions mâle 2000 et femelle 1000 l'une par rapport à l'autre et maintiennent la surface conique 2210 de la jonction mâle 2000 en appui contre la portée conique 1210 de la jonction femelle 1000.

De manière avantageuse, lesdits trous débouchants 2240 sont sensiblement désaxés vers le bas par rapport aux orifices de sortie 1351 des billes de blocage 1350, d'une valeur comprise entre zéro millimètre et une valeur égale au rayon des billes de blocage de la broche à billes. Ce désaxement des trous débouchants 2240 permet aux billes de blocage 1350 d'exercer un effort de traction vers le haut sur ladite jonction mâle 2000, lorsqu'elles sont engagées dans lesdits trous débouchants, et d'entraîner la jonction mâle 2000 vers le haut dudit fourreau 1200 afin de bloquer les pièces l'une contre l'autre, de sorte que la surface conique 2210 de la jonction mâle 2000 soit plaquée contre la portée conique 1210 de la jonction femelle 1000. De plus, le diamètre de perçage des trous débouchants 2240 est de préférence légèrement inférieur à celui des billes de blocage 1350. Le désaxement des trous débouchants 2240 et leur diamètre permet ainsi d'éviter l'apparition d'un éventuel jeu dans l'entrainement en rotation des jonctions mâle 2000 et femelle 1000. Les jonctions mâle 2000 et femelle 1000 sont bloquées en rotation l'une par rapport à l'autre et sont solidaires l'une de l'autre, de sorte que lorsqu'un utilisateur tourne le guidon, la potence du guidon entraîne les deux jonctions du pivot de direction simultanément en rotation autour de l'axe A-A pour faire tourner la (ou les) roue(s) du module avant.

Une variante de réalisation, non représentée sur les figures, peut consister à utiliser un mécanisme de verrouillage dans lequel la jonction mâle 2000 vient s'insérer. Dans ce cas, le mécanisme de verrouillage peut se présenter sous la forme d'un raccord à billes, disposé sur le dessus de l'extrémité 1230 du fourreau et de son orifice débouchant 1231. Le raccord à billes comprend des billes régulièrement positionnées sur sa paroi annulaire interne. Il est actionné par un mécanisme, situé sur le dessus du tube de direction 1100, qui le fait monter ou descendre entre une position respectivement déverrouillée et une position verrouillée. Lorsque la jonction mâle 2000 est insérée dans la jonction femelle 1000, son extrémité traverse l'orifice débouchant 1231 pratiqué à l'extrémité 1230 du fourreau 1200, et s'insère dans le raccord à billes disposé au-dessus du fourreau 1200. Selon ce mode de réalisation, lors du verrouillage, le raccord à billes descend vers le fourreau jusqu'à ce que les billes de blocage se positionnent dans des trous borgnes, ménagés dans la paroi annulaire externe de l'extrémité mâle de ladite jonction mâle 2000 au droit des billes de blocage du raccord à billes.

L'empilement constitué par la portée conique 1210 du fourreau 1200, le tube de direction 1100, le roulement de jeu de direction bas 220, la douille de direction 200, le roulement de jeu de direction haut 210, le cache 211, l'entretoise 250 et la potence 110 est maintenu en pression au moyen d'un bouchon 1400 positionné sur le dessus du tube de direction 1100 et sous la molette d'actionnement 1320 du mécanisme de verrouillage 1300. Ainsi, la pression exercée par le bouchon 1400 sur l'empilement permet de supprimer un éventuel jeu qui pourrait subsister entre les différentes pièces de l'empilement, en plaquant le roulement du jeu de direction bas 220 contre la surface externe du fourreau 1200, en regard de la portée conique 1210.

De manière avantageuse, un insert 1500, fixé au tube de direction 1100 au moyen d'au moins une goupille 1510 par exemple, peut être prévu pour assurer un bon maintien de la tige 1310 du mécanisme de verrouillage relié à la molette d'actionnement 1320.

L'assemblage des pièces, comprenant le tube de direction 1100, le fourreau 1200 et le mécanisme de verrouillage 1300 avec son mécanisme d'actionnement 1320, formant la jonction femelle 1000 du pivot de direction reste en place à demeure dans la douille de direction 200 solidaire du cadre de la structure arrière du véhicule. Il n'est pas destiné à être démonté par l'utilisateur, mais seulement par une personne avertie, un mécanicien cycle, en cas de maintenance.

La figure 4 représente de manière schématique une structure arrière 500 d'une bicyclette raccordée à un module avant se présentant sous la forme d'un module cargo 600. La structure arrière 500 comprend un cadre 550 supportant une roue arrière 520, un pédalier 510, ainsi qu'un guidon 100 dont la potence 110 vient s'insérer par le dessus sur un pivot de direction. Le pédalier 510 entraîne la roue arrière 520 en rotation par une liaison mécanique, classiquement par une chaîne ou courroie, et/ou par l'intermédiaire d'un moteur lorsque le véhicule est assisté d'un moteur électrique. La structure arrière 500 peut en outre accueillir une selle et un mécanisme dérailleur commandé par une manette positionnée sur le cintre du guidon pour permettre un changement de vitesse du véhicule.

Le module avant 600 peut se présenter sous différentes formes et peut être interchangé en fonction du besoin de chargement de l'utilisateur. Ainsi, le module avant peut se présenter sous la forme d'une roue avant classique avec sa fourche raccordée à la jonction mâle du pivot de direction. Dans ce cas, la jonction mâle solidaire de la fourche de la roue avant se raccorde fixement à la jonction femelle du pivot de direction solidaire de la structure arrière pour permettre une transmission du couple de rotation entre le guidon et la roue avant.

Le module avant peut en outre se présenter sous la forme d'un module cargo 600 tel que schématisé sur la figure 4, comprenant un cadre 650 et un emplacement 660 destiné à recevoir une plateforme et ou une caisse pour permettre le transport de charges ou de personnes et comprenant une ou plusieurs roues 620 déportées. Le module cargo comprend aussi un tube de direction solidaire d'un système de transmission de rotation pour pouvoir agir sur la ou les roues déportées. Sur l'exemple illustré sur la figure 4, le module cargo comprend une seule roue 620 déportée. Le module cargo 600 se raccorde alors avec la structure arrière 500 de telle manière que la jonction mâle du pivot de direction, solidaire du tube de direction du module cargo 600 et du système de transmission de rotation, se raccorde fixement à la jonction femelle du pivot de direction solidaire de la potence 110 de guidon 100 de la structure arrière 500 pour permettre une transmission du couple de rotation entre le guidon et la roue avant déportée par l'intermédiaire dudit système de transmission de rotation. Le système de transmission de rotation comprend par exemple une première poulie de direction 630, sur laquelle la jonction mâle du pivot de direction agit par l'intermédiaire du tube de direction du module cargo. Cette première poulie de direction 630 est reliée par des câbles 631 à une deuxième poulie non schématisée sur la figure 4, située au-dessus de la roue déportée 620 et reliée à la fourche 621 de cette roue déportée. Selon une variante de réalisation, le système de transmission de rotation peut être un système à bielle de direction classiquement utilisé sur les vélos cargo. Le système de transmission de rotation avec poulies de direction et câbles est cependant préféré car il permet d'obtenir un meilleur rayon de braquage et d'améliorer le confort de conduite.

La figure 4 illustre de manière schématique un exemple de module avant. Bien sûr, le module avant peut se présenter sous d'autres formes avec une ou plusieurs roues déportées, sans sortir du cadre de l'invention.

Lorsque le module avant est un module cargo 600, il est préférable de le fixer en un deuxième point de la structure arrière 500 pour permettre à la structure arrière 500 de récupérer les efforts de traction et éviter l'apparition d'un porte-à-faux entre la structure arrière 500 et le module avant 600. Ce deuxième point de fixation est avantageusement situé sur le cadre 550 de la structure arrière 500, en un point 551 du cadre 550, situé entre le pédalier 510 et la douille de direction 200, et en regard d'un point 651 du cadre 650 du module avant. Ce choix de positionnement du point de fixation sur le cadre entre le pédalier 510 et la douille de direction 200 est préféré par rapport à un point de fixation classique au niveau du boîtier de pédalier car le choix classique impose souvent une modification plus importante du boîtier de pédalier. Or, si l'on souhaite s'adapter à un cadre de vélo existant, il est préférable d'avoir le moins de transformation à faire. De plus, ce deuxième point de fixation 551 est situé sur une partie inférieure du cadre 550, c'est-à-dire orientée vers le sol et en regard du cadre 650 du module cargo 600, et présente un encombrement très faible, de quelques centimètres, ce qui le rend compatible avec la présence d'une batterie disposée sur une partie supérieure du cadre 550, opposée audit deuxième point de fixation 551.

La fixation entre le cadre 650 du module cargo et le cadre 550 de la structure arrière 500 peut être réalisée par tout moyen connu. A titre d'exemple, elle peut être réalisée au moyen d'un collier ou d'une sangle de serrage, ou d'un crochet. Une telle fixation ne nécessite pas de modification du cadre de la structure arrière. La fixation peut aussi être réalisée avec un moyen de verrouillage choisi parmi une goupille de verrouillage, ou une broche à bille par exemple, ou tout autre moyen de fixation connu.

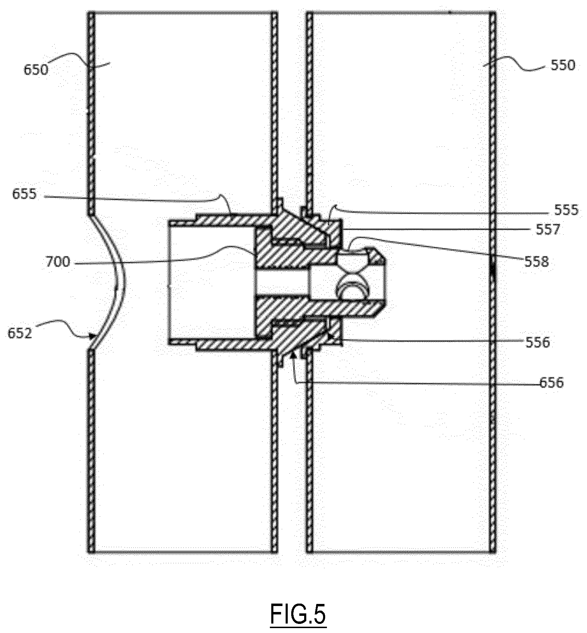

De manière préférée, la fixation est réalisée au moyen d'une broche à billes. Ainsi, les deux points de fixation d'un module cargo 600 sur la structure arrière 500 du véhicule peuvent être réalisés avec des moyens de fixation identiques, ce qui permet de réduire les coûts de fabrication. Une telle fixation est représentée plus en détails sur la figure 5. Pour réaliser cette fixation le cadre de la structure arrière du véhicule léger est légèrement modifié de manière à y intégrer un insert 555, formant une prise femelle et présentant une portée conique 556. De même, le cadre 650 du module cargo est légèrement modifié de manière à y intégrer un insert 655, formant une prise mâle et présentant une portée conique 656. Ces deux inserts 555, 655 sont fixés à leur cadre 550, 650 respectif par tout moyen connu. Ils sont de préférence fixés par soudure. Une broche à billes 700 est fixée dans l'insert mâle 655 du cadre 650 du module cargo. Un orifice est ménagé dans l'insert 555 du cadre 550 de la structure arrière, pour accueillir le mécanisme de verrouillage 700. Une molette d'actionnement, non représentée sur la figure 5, accessible par un évidement 652 pratiqué dans le cadre 650 du module cargo, au droit de l'insert 655, permet d'actionner la broche à billes pour son verrouillage et son déverrouillage. Ainsi, lors du verrouillage de la broche à billes 700, les billes de blocage sortent de leur logement et appuient sur une surface d'extrémité 557 de l'insert femelle 555 et serrent les deux inserts l'un contre l'autre, de sorte que les deux portées coniques 556 et 656 en regard appuient l'une contre l'autre et évitent tout mouvement de translation entre les deux cadres.

De préférence, un jeu négatif est prévu entre l'orifice de sortie 558 des billes de blocage et la surface d'extrémité 557 de l'insert femelle 555. Ce jeu négatif permet aux billes de blocage, en position de verrouillage, de maintenir l'insert femelle 555 en tension en la plaquant contre l'insert mâle 655 du cadre 650 du module cargo et de maintenir en pression la portée conique 556 dudit insert femelle 555 contre la portée conique 656 dudit insert mâle 655, de manière à bloquer tout mouvement d'un cadre par rapport à l'autre.

De manière avantageuse, ce jeu négatif est compris entre zéro millimètre et une valeur égale au rayon des billes de blocage de la broche à billes. Ainsi, pour des billes de cinq millimètres de diamètre par exemple, le jeu négatif est compris entre zéro et deux millimètres et demi.

Lorsque le module avant est raccordé à la structure arrière du véhicule léger, il est préférable également de raccorder les freins du module avant sur une manette de commande généralement située sur le cintre du guidon. De manière avantageuse, les freins sont des freins à disque hydrauliques. Un tel système de freinage présente l'avantage de se raccorder très facilement, au moyen d'un raccord hydraulique, de type à baïonnette, sur la manette de commande et ne nécessite donc pas d'outil spécifique.

Le système de conversion qui vient d'être décrit permet de convertir un vélo en vélo cargo et réciproquement, sans outil et dans un temps très rapide, en général inférieur à une minute et de préférence entre trente secondes et une minute. Il permet un raccordement efficace des deux parties du vélo et assure une conduite confortable en évitant l'apparition d'un quelconque jeu dans la direction. Il s'adapte à des vélos existants, électriques ou non, moyennant le remplacement du pivot de fourche classique de la roue avant par le pivot de direction en deux parties. Un tel système de conversion permet d'avoir un seul module cargo s'adaptant sur plusieurs vélos d'une même famille. Il permet donc de gagner de la place en termes de stationnement et de limiter les coûts en achetant un seul module cargo pour plusieurs membres d'une même famille.

## Revendications

1. Système de conversion d'un véhicule léger en un véhicule léger modulaire et réciproquement, ledit véhicule léger comprenant une structure arrière (500) et un module avant se présentant sous la forme d'une roue avant de bicyclette équipée d'une fourche raccordée à ladite structure arrière (500) par l'intermédiaire d'un pivot de direction, ledit véhicule léger modulaire comprenant une structure arrière (500) et un module avant se présentant sous la forme d'un module cargo (600) comprenant au moins une roue (620) déportée et un système de transmission de rotation raccordé à ladite structure arrière (500) par l'intermédiaire d'un pivot de direction, ladite structure arrière (500) comprenant un cadre (550) supportant au moins une roue arrière (520), un guidon (100) et une douille de direction (200), solidaire dudit cadre (550), traversée par ledit pivot de direction sur lequel vient se fixer une potence (110) dudit guidon (100), ledit pivot de direction étant relié à ladite douille de direction (200) par une liaison pivot assurée par un roulement de jeu de direction haut (210) et un roulement de jeu de direction bas (220), et se présentant en deux parties, une première partie formant jonction femelle (1000) et une deuxième partie formant jonction mâle (2000), chacune desdites jonctions femelle (1000) et mâle (2000) étant solidaire de ladite potence (110) de guidon (100) de ladite structure arrière (500) ou dudit module avant, ladite jonction mâle (2000) s'insérant dans ladite jonction femelle (1000), ledit système de conversion étant **caractérisé en ce que** ladite première partie formant jonction femelle (1000) comprend un tube (1100) et, fixé à l'intérieur dudit tube (1100), un fourreau (1200) dont une extrémité ouverte forme un orifice (1211) de ladite jonction femelle (1000) par lequel s'insère ladite jonction mâle (2000), ledit fourreau (1200) présentant, sur le pourtour dudit orifice (1211), une portée conique (1210) et, opposée à ladite portée conique (1210), une extrémité (1230) présentant un alésage (1220), **en ce que** ladite deuxième partie formant jonction mâle (2000) comprend une extrémité mâle orientée en regard de ladite extrémité (1230) dudit fourreau (1200) et présentant une portée cylindrique (2220) et, opposée à ladite extrémité mâle, une surface conique (2210), et **en ce qu'**un mécanisme de verrouillage (1300) est disposé à ladite extrémité (1230) dudit fourreau (1200) de manière à coopérer avec ladite extrémité mâle de ladite jonction mâle (2000), de sorte que ladite portée cylindrique (2220) et ladite surface conique (2210) de ladite jonction mâle (2000) sont plaquées respectivement contre ledit alésage (1220) et contre ladite portée conique (1210) dudit fourreau (1200) par actionnement dudit mécanisme de verrouillage (1300) permettant de maintenir ladite jonction mâle (2000) solidaire de ladite jonction femelle (1000).

2. Système de conversion selon la revendication 1, **caractérisé en ce que** ladite première partie formant jonction femelle (1000) est solidaire de ladite potence (110) de guidon (100) de ladite structure arrière (500) dudit véhicule, ledit tube (1100) de ladite jonction femelle (1000) formant un tube de direction, traversant ladite douille de direction (200), sur lequel se fixe ladite potence (110) dudit guidon (100), **en ce que** ladite extrémité (1230) dudit fourreau (1200),, opposée à ladite portée conique (1210), comprend un orifice débouchant (1231) dans lequel est fixé ledit mécanisme de verrouillage (1300) et **en ce que** ladite deuxième partie formant jonction mâle (2000) est solidaire dudit module avant et comprend dans une surface (2230) de ladite extrémité mâle, un orifice débouchant (2231) apte à accueillir ledit mécanisme de verrouillage (1300).

3. Système de conversion selon la revendication 1, **caractérisé en ce que** ladite première partie formant jonction femelle (1000) est solidaire de ladite potence (110) de guidon (100) de ladite structure arrière (500) dudit véhicule, ledit tube (1100) de ladite jonction femelle (1000) formant un tube de direction, traversant ladite douille de direction (200), sur lequel se fixe ladite potence (110) dudit guidon (100), **en ce que** ladite extrémité (1230) dudit fourreau (1200), opposée à ladite portée conique (1210), comprend un orifice débouchant (1231) au-dessus duquel est disposé ledit mécanisme de verrouillage et **en ce que** ladite deuxième partie formant jonction mâle (2000) est solidaire dudit module avant , ladite extrémité mâle de ladite jonction mâle (2000) étant apte à passer à travers ledit orifice débouchant (1231) dudit fourreau (1200) et à s'insérer dans ledit mécanisme de verrouillage.

4. Système de conversion selon l'une des revendications 1 à 3, **caractérisé en ce que** le mécanisme de verrouillage (1300) est choisi parmi une broche à billes ou une goupille d'arrêt ou un levier de blocage ou un raccord à billes et comprend un mécanisme d'actionnement (1320) accessible par le haut du tube de direction (1100).

5. Système de conversion selon les revendications 2 et 4, **caractérisé en ce que** le mécanisme de verrouillage (1300) est une broche à billes, dont les billes de blocage (1350), en position de verrouillage, appuient contre une face interne d'extrémité (2232) de ladite jonction mâle (2000), de sorte qu'elles maintiennent ladite surface conique (2210) de ladite jonction mâle (2000) contre ladite portée conique (1210) de ladite jonction femelle (1000).

6. Système de conversion selon la revendication 5, **caractérisé en ce qu'**un jeu négatif, compris entre zéro millimètre et une valeur égale au rayon des billes de blocage (1350) de la broche à billes, est prévu entre l'orifice de sortie des billes de blocage (1350) de la broche à billes et ladite face interne d'extrémité (2232) de ladite jonction mâle (2000).

7. Système de conversion selon les revendications 2 et 4, **caractérisé en ce que** le mécanisme de verrouillage (1300) est une broche à billes et **en ce que** des trous débouchants (2240) sont ménagés dans la paroi annulaire de ladite jonction mâle (2000), en regard des orifices de sorties (1351) des billes de blocage (1350) de ladite broche à billes, pour accueillir lesdites billes de blocage (1350) en position de verrouillage, de sorte qu'elles bloquent la rotation des deux jonctions mâle (2000) et femelle (1000) l'une par rapport à l'autre et maintiennent ladite surface conique (2210) de ladite jonction mâle (2000) en appui contre ladite portée conique (1210) de ladite jonction femelle (1000).

8. Système de conversion selon la revendication 7, **caractérisé en ce que** lesdits trous débouchants (2240) sont sensiblement désaxés vers le bas par rapport aux orifices de sortie (1351) desdites billes de blocage (1350) de ladite broche à billes, d'une valeur comprise entre zéro millimètre et une valeur égale au rayon desdites billes de blocage (1350).

9. Système de conversion selon les revendications 3 et 4, **caractérisé en ce que** le mécanisme de verrouillage est un raccord à billes disposé au-dessus de l'orifice débouchant (1231) pratiqué à l'extrémité (1230) du fourreau (1200) et **en ce qu'**en position de verrouillage, les billes dudit raccord à billes se positionnent dans des trous borgnes ménagés dans la paroi annulaire externe de ladite extrémité mâle de ladite jonction mâle (2000).

10. Système de conversion selon l'une des revendications 1 à 3, **caractérisé en ce que** le module avant est une roue avant de bicyclette, dont la fourche est solidaire de ladite jonction mâle (2000), ou un module cargo (600) comprenant au moins une roue déportée (620) et dont un système de transmission de rotation est solidaire de ladite jonction mâle (2000).

11. Système de conversion selon la revendication 1, **caractérisé en ce que** lorsque le module avant est un module cargo (600) et que le cadre (550) de ladite structure arrière (500) comprend un pédalier (510), ledit système de conversion comprend en outre un système de fixation d'un cadre (650) du module cargo (600) sur le cadre (550) de ladite structure arrière (500) du véhicule léger modulaire, ledit système de fixation raccordant un premier point (551) dudit cadre (550) de ladite structure arrière (500), se situant entre ledit pédalier (510) et la douille de direction (200), à un deuxième point (651) dudit cadre (650) du module cargo (600) se situant en regard dudit premier point (551).
